# FASCICULE DE BREVET EUROPEEN

(11) **EP 2 288 939 B1**
(45) Date de publication et mention de la délivrance du brevet: **07.11.2018**
(21) Numéro de dépôt: 09765809.0
(22) Date de dépôt: 15.06.2009
(51) Int. Cl.: G01T 1/164

(54) **DISPOSITIF D'IMAGERIE GAMMA AMELIORE PERMETTANT LA LOCALISATION PRECISE DE SOURCES IRRADIANTES DANS L'ESPACE**
VERBESSERTE GAMMASTRAHLEN-BILDGEBUNGSEINRICHTUNG ZUR GENAUEN LOKALISIERUNG VON BESTRAHLUNGSQUELLEN IM RAUM
IMPROVED GAMMA-RAY IMAGING DEVICE FOR PRECISE LOCATION OF IRRADIATING SOURCES IN SPACE

(30) Priorité: 16.06.2008 FR 0853959
(43) Date de publication de la demande: 02.03.2011
(73) Titulaire: Commissariat à l'Énergie Atomique et aux Énergies Alternatives, 75015 Paris (FR)
(72) Inventeur: LE GOALLER, Christophe, F-38240 Meylan (FR); MAHE, Charly, F-26130 Saint Paul Trois Châteaux (FR)
(74) Mandataire: Ilgart, Jean-Christophe
(86) Numéro de dépôt international: PCT/EP2009/057327
(87) Numéro de publication internationale: WO 2009/153229

(56) Documents cités:
- WO-A-2006/090035
- WO-A-2006/123119
- FR-A- 2 734 372
- US-A- 5 204 533
- US-A- 5 371 370

## Description

### DOMAINE TECHNIQUE

L'invention est relative à un dispositif d'imagerie gamma amélioré permettant la localisation précise de sources irradiantes dans l'espace, ce qui le rend particulièrement adapté aux préparations d'interventions en milieu irradiant telles que les opérations de maintenance, de démantèlement ou d'inspections. Un tel dispositif incorpore une gamma caméra.

### ÉTAT DE LA TECHNIQUE ANTÉRIEURE

Depuis le début des années 1990, le demandeur a développé un dispositif d'imagerie gamma dénommé ALADIN relativement compact destiné à localiser des sources irradiantes émettrices de rayonnement gamma. Un tel dispositif d'imagerie gamma délivre une image finale formée d'une image gamma dans laquelle au moins une source irradiante est représentée comme une tache en fausses couleurs qui se superpose sur une image de lumière visible ou quasi visible de la scène observée. L'image de la source irradiante correspond à une distribution d'intensité des rayonnements gamma reçus par la gamma caméra, tandis que l'image de lumière visible ou quasi visible de la scène observée est acquise soit par la gamma caméra elle-même, soit par une caméra auxiliaire sensible à la lumière visible ou quasi visible, noir et blanc ou couleurs qui coopère avec la gamma caméra. Un tel dispositif d'imagerie gamma délivre une information sur la localisation d'éventuelles sources irradiantes observées par le dispositif. L'image de lumière quasi visible peut être une image infra rouge.

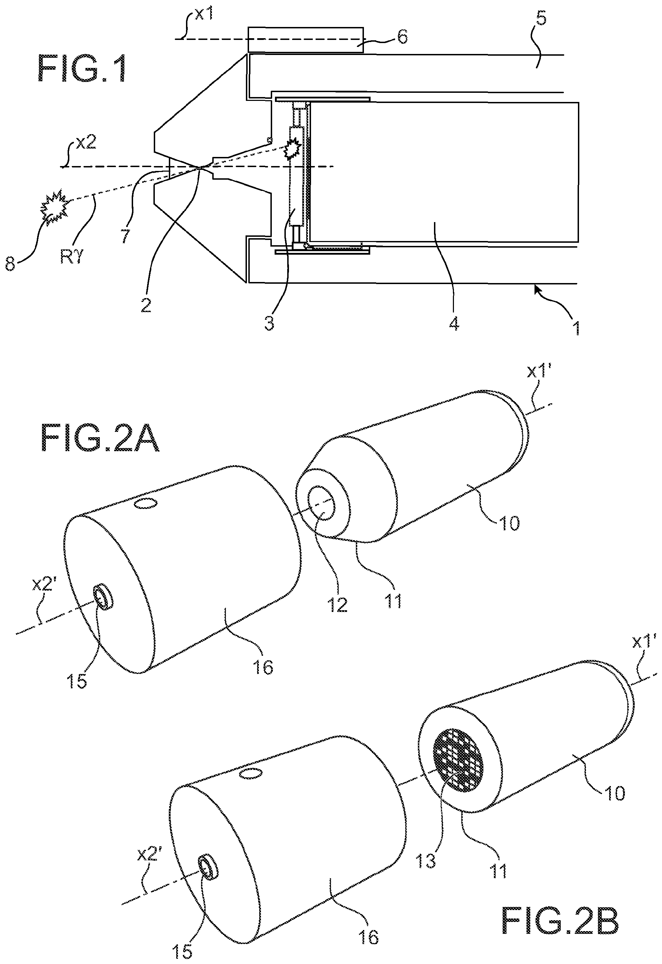

La figure 1 montre en coupe un exemple d'un tel dispositif d'imagerie gamma. Il comporte une gamma caméra 1 comprenant en cascade un collimateur de type sténopé 2 (pinhole en anglais), un scintillateur 3, un ensemble de composants photoniques 4 incorporant en cascade un tube intensificateur d'image, un réducteur à fibre optique, un détecteur de type dispositif à couplage de charge (CCD en anglais). Les composants photoniques ne sont pas représentés. Le scintillateur 3 et l'ensemble de composants photoniques 4 sont placés dans une enveloppe blindée 5 vis-à-vis du rayonnement gamma γ provenant d'au moins une source irradiante 8 observée par le dispositif d'imagerie gamma. En variante, le collimateur de type sténopé 2 pourrait être remplacé par une ouverture à masque codé (non représentée). Les gamma caméras à masque codé ont une plus grande sensibilité que les gamma caméras à sténopé.

Le scintillateur 3 transforme le rayonnement gamma Rγ reçu en signaux lumineux appliqués à l'ensemble de composants photoniques 4 et ce dernier transforme les signaux lumineux reçus en signaux électriques qui vont pouvoir être traités.

Le dispositif d'imagerie gamma peut comporter de plus, accolée à la gamma caméra 1, une caméra auxiliaire 6 sensible à la lumière visible ou proche du visible, dont l'axe optique x1 est décalé de l'axe de visée x2 de la gamma caméra 1 tout en restant sensiblement parallèle à l'axe de visée x2 de la gamma caméra 1. Cette configuration présente l'avantage de pouvoir acquérir simultanément l'image de lumière visible ou quasi visible appelée par la suite image de lumière visible, et le rayonnement gamma conduisant à l'image gamma. Mais son inconvénient est qu'il est nécessaire de procéder à une correction de parallaxe sur l'image de lumière visible de manière à ce que l'image de lumière visible corrigée semble avoir été acquise avec la même direction de visée que l'image gamma.

Une autre configuration est décrite dans la demande de brevet [1] dont les références sont en fin de description, la correction de parallaxe est réalisée par un système de visée à miroir à 45°, ce qui permet à la caméra auxiliaire d'observer un champ visuel dont l'axe de visée est sensiblement confondu avec celui de la gamma caméra. Cette configuration implique un montage relativement complexe du système de visée qui doit avoir une position parfaitement ajustée.

Il est possible de prévoir que la gamma caméra 1 comporte en outre, en amont du collimateur 2, un obturateur 7. Lorsque le collimateur 2 est de type sténopé, l'obturateur 7 est apte à prendre deux positions : une position ouverte et une position fermée. Lorsque l'obturateur 7 est en position ouverte, la gamma caméra 1 peut acquérir l'image de lumière visible de la scène observée et lorsque l'obturateur 7 est en position fermée, la gamma caméra 1 peut acquérir le rayonnement gamma et donc l'image gamma. La même voie d'acquisition peut être employée. Mais les deux images ne peuvent pas être simultanées puisqu'il faut commuter l'obturateur 7 d'une position à l'autre.

L'image gamma est une image numérique codée généralement sur 8 bits (256 niveaux de gris). Elle est renouvelée selon une cadence d'acquisition variant entre quelques dizaines de millisecondes (cadence temps réel) et quelques secondes (cadence dite quasi temps réel). On peut accumuler un certain nombre d'images gamma pour aboutir à une image gamma codée sur 16 bits. Le nombre d'images utilisé est souvent compris entre quelques centaines en cas de forte irradiation et quelques milliers en cas de faible irradiation.

Lorsqu'une image gamma est acquise, l'obturateur 7 est fermé et on ne peut donc pas acquérir une image visible simultanément.

Cette image permet de détecter la présence d'une source irradiante mais ne permet pas de la localiser spatialement avec précision. L'expérience montre qu'avec une telle gamma caméra la détection d'une source irradiante produisant un débit de dose de 10 µGy/h est assurée dans une ambiance globale de 0,1 µGy/h. Cette image gamma est obtenue après traitement des signaux délivrés par l'ensemble de composants photoniques, ces traitements pouvant consister en un filtrage passe-bas et une colorisation.

Dans cette configuration, l'image gamma et l'image de lumière visible sont parfaitement alignées car elles ont été capturées avec le même axe. Mais elles ne sont pas prises simultanément, puisqu'elles proviennent de deux états différents de l'obturateur. L'image finale provient d'un traitement a postériori.

L'obturateur 7 avec ses deux positions ne peut être utilisé qu'avec la gamma caméra 1 à collimateur de type sténopé car avec une ouverture à masque codé aucune image exploitable ne peut être acquise en position ouverte. Avec une ouverture à masque codé, on utilise un obturateur fixe et fermé. Avec la gamma caméra à masque codé, on utilise forcément une caméra auxiliaire accolée à la gamma caméra pour obtenir l'image de lumière visible et la superposition de l'image gamma et de l'image de lumière visible est réalisée de manière approximative après étalonnage en laboratoire. De plus, il faut connaître la distance entre le dispositif d'imagerie gamma et la source irradiante ce qui constitue une contrainte importante.

Les documents [2] et [3] dont les références se trouvent en fin de description décrivent le fonctionnement et les performances de dispositifs d'imagerie gamma à collimateur de type sténopé. Les documents référencés [4] et [5] décrivent le fonctionnement et les performances de dispositifs d'imagerie gamma à ouverture à masque codé. La demande de brevet référencée [6] décrit une instrumentation supplémentaire pour le dispositif d'imagerie gamma permettant d'améliorer la précision des mesures effectuées. Les documents référencés [7] et [8] montrent comment le scintillateur et les composants photoniques peuvent être remplacés par un détecteur solide composé d'un semi-conducteur pixélisé hybridé à une électronique de lecture. Il peut également s'agir d'une matrice de semi-conducteurs élémentaires. Le détecteur solide à semi-conducteurs convertit directement le rayonnement gamma reçu en signaux électriques. Le matériau semi-conducteur peut être par exemple du silicium ou du tellure de cadmium. Dans ces deux derniers cas, la gamma caméra ne peut acquérir d'image de lumière visible et il faut prévoir la caméra auxiliaire.

Enfin, le document [9] décrit un dispositif d'imagerie gamma comprenant notamment un capteur optique et une gamma caméra possédant un collimateur. Le dispositif d'imagerie gamma peut en outre inclure une sonde de spectrométrie gamma collimatée comprenant un détecteur de spectrométrie gamma placé en aval d'un collimateur de spectrométrie gamma. La sonde est solidaire de la gamma caméra ou de la caméra auxiliaire. La figure 1 ne montre pas de sonde de spectrométrie gamma collimatée. La sonde de spectrométrie gamma collimatée permet de faire des mesures d'énergie du rayonnement gamma reçu et d'en comptabiliser le nombre pendant une durée prédéterminée, ce qui permet d'identifier et de quantifier les radioéléments responsables de l'irradiation gamma.

### EXPOSÉ DE L'INVENTION

La présente invention a justement comme but de proposer un dispositif d'imagerie gamma qui ne présente pas les inconvénients mentionnés ci-dessus à savoir : nécessité du traitement de parallaxe entre l'image gamma et l'image de lumière visible d'une part et d'autre part obtention de l'image finale en différé.

Pour y parvenir la présente invention concerne un dispositif d'imagerie gamma, selon la revendication 1, comportant :
- une gamma caméra à collimateur de type sténopé destinée à acquérir une image de rayonnement gamma, dite image gamma, d'une scène observée, pourvue d'une face avant et possédant un axe de visée ;
- une caméra auxiliaire destinée à capturer une image de lumière visible de la scène observée. Selon l'invention la caméra auxiliaire se trouve en amont de la face avant de la gamma caméra, et possède un axe optique qui est sensiblement confondu avec l'axe de visée de la gamma caméra de sorte que l'image de lumière visible et l'image gamma sont capturées sensiblement simultanément avec une même direction de visée.

Le dispositif d'imagerie gamma peut comporter, en outre, des moyens d'acquisition et de traitement de signaux délivrés par la caméra auxiliaire et par la gamma caméra destinés à fournir, sensiblement en temps réel par rapport à la capture, à des moyens d'affichage, une image finale de la scène observée qui est une superposition de l'image de lumière visible et d'une représentation d'une ou plusieurs sources irradiantes se trouvant dans la scène observée et ayant été détectées sur l'image gamma capturée.

La représentation est une tache colorisée ou un contour.

La caméra auxiliaire peut être montée sur un support qui est fixé à l'avant de la gamma caméra, notamment par vissage ou par emboîtement.

Le support peut être sensiblement un cylindre de révolution et posséder un diamètre extérieur supérieur au diamètre extérieur de la gamma caméra pour permettre le vissage ou l'emboîtement. Le dispositif d'imagerie gamma équipé de la caméra auxiliaire reste ainsi tout à fait compact.

Avantageusement, le support est réalisé dans un matériau opaque vis-à-vis de la lumière visible, de manière à empêcher qu'elle pénètre à l'intérieur de la gamma caméra.

Le support est réalisé dans un matériau à densité suffisamment faible, tel que l'aluminium ou une matière plastique, de manière à atténuer le moins possible le rayonnement gamma en provenance de la scène observée.

Le dispositif d'imagerie gamma peut en outre comporter une sonde de spectrométrie collimatée solidaire du support et/ou de la gamma caméra.

La gamma caméra peut comporter en outre, en face avant, un obturateur qui peut être amovible ou non, cet obturateur permettant de réaliser des images gamma lorsqu'il est fermé ou des images visibles lorsqu'il est ouvert.

La gamma caméra peut être apte à fournir une image de lumière visible de la scène observée. Les images de lumière visible provenant de la gamma caméra et de la caméra auxiliaire sont recalées.

La présente invention concerne également un procédé de localisation d'une ou plusieurs sources irradiantes présentes dans une scène observée par un dispositif d'imagerie gamma ainsi caractérisé. Il comporte les étapes de :
- capture sensiblement simultanée d'une image de lumière visible de la scène observée et d'un rayonnement gamma provenant des sources irradiantes ;
- formation d'une image gamma de la scène observée à partir du rayonnement gamma capturé ;
- traitement de l'image gamma conduisant à une représentation des sources irradiantes avec :
   - une division de l'image gamma en une ou plusieurs zones de base formées de pixels,
   - une attribution d'au moins un indicateur à chaque zone de base, cet indicateur traduisant une quantité de signal des pixels de la zone de base ;
   - une détermination parmi les zones de base d'une ou plusieurs zones utiles pour lesquelles l'indicateur est supérieur à un seuil ;
   - éventuellement un détourage des zones utiles pour faire apparaître un contour des zones utiles, les zones utiles ou le contour des zones utiles donnant la représentation.
- superposition de l'image de lumière visible et de la représentation pour obtenir une image finale de la scène observée ;
- affichage de l'image finale.

Dans un autre mode de fonctionnement, le traitement peut comprendre en outre :
- une détermination parmi les zones de base d'une ou plusieurs zones neutres pour lesquelles l'indicateur est inférieur au seuil ;
- une affectation d'un niveau zéro aux pixels des zones neutres ;
- un seuillage à un ou plusieurs seuils et une colorisation en fonction des seuils, des zones neutres et utiles, les zones neutres et utiles, après seuillage et colorisation donnant la représentation.

Le seuillage peut être précédé d'un filtrage de manière à s'affranchir de parasites.

L'indicateur précédemment cité peut être une moyenne de niveau des pixels des zones de base par exemple.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- la figure 1 déjà décrite est une coupe d'un dispositif d'imagerie gamma connu ;
- les figures 2A, 2C, 2D sont des vues en trois dimensions d'exemples de dispositifs d'imagerie gamma selon l'invention durant leur montage, la figure 2B montrant un dispositif d'imagerie gamma à masque codé ;
- la figure 3 illustre en coupe un exemple de dispositif d'imagerie gamma selon l'invention ;
- les figures 4A à 4C montrent différentes étapes d'exemples de procédé de localisation d'une ou plusieurs sources irradiantes présentes dans une scène observée par un dispositif d'imagerie gamma selon l'invention.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

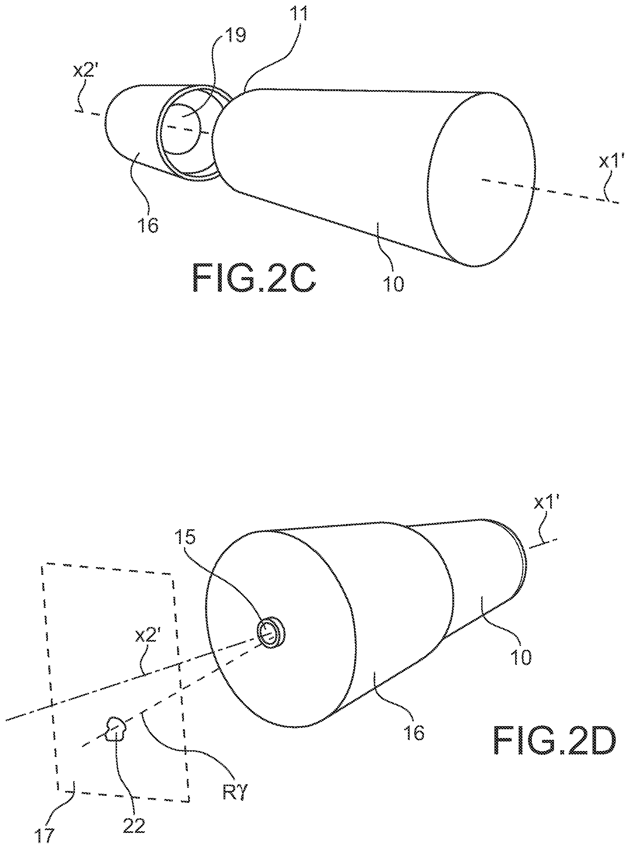

On va maintenant s'intéresser aux figures 2A, 2C, 2D qui montrent différentes vues d'un dispositif d'imagerie gamma selon l'invention en cours d'assemblage. Il comporte une gamma caméra 10 conventionnelle qui peut tout à fait être similaire à celle décrite à la figure 1 avec la référence 1. Il s'agit d'une gamma caméra à collimateur de type sténopé comme sur la figure 2A. Sur la figure 2B, la gamma caméra est à masque codé, cette figure ne fait pas partie de l'invention. La gamma caméra 10 possède une face avant 11 du côté du sténopé 12. Sur les figures 2C, 2D, la face avant de la gamma caméra côté sténopé n'est pas visible. La gamma caméra 10 est destinée à acquérir une image gamma d'une scène observée 17.

La gamma caméra 10 possède un axe de visée x1'. Le dispositif d'imagerie gamma comporte en outre une caméra auxiliaire 15 sensible à la lumière visible ou proche du visible, par exemple infrarouge. La caméra auxiliaire 15 est de préférence une caméra numérique. La caméra auxiliaire 15 comporte un axe optique x2'. La caméra auxiliaire 15 est solidaire de la face avant 11 de la gamma caméra 10, son axe optique x2' étant sensiblement confondu avec l'axe de visée x1' de la gamma caméra 10. La gamma caméra 10 et la caméra auxiliaire 15 regardent avec la même direction de visée la scène observée 17, la caméra auxiliaire 15 étant en amont de la gamma caméra 10 par rapport à la scène observée 17.

La plupart des gamma caméras commerciales utilisées dans le domaine de l'imagerie médicale comprennent un collimateur présentant des canaux parallèles, ou un collimateur de type masque codé. Cette configuration assure une meilleure collecte du signal, mais ne permet pas d'obtenir une image visible. Les collimateurs à sténopé permettent l'obtention, par la gamma caméra d'une image en lumière visible exploitable, bien que de qualité médiocre. Ainsi, comme cela est décrit précédemment, il est possible, avec le même dispositif d'imagerie, de basculer d'un mode en lumière visible en un mode rayonnement gamma en utilisant un obturateur amovible, l'image en lumière visible étant obtenue lorsque l'obturateur est ouvert et l'image de rayonnement gamma étant obtenue avec l'obturateur fermé. Mais il est impossible d'obtenir simultanément une image en lumière visible et une image du rayonnement gamma. Si la quantité de lumière atteignant la gamma caméra lorsque l'obturateur est ouvert est importante, cela peut créer des phénomènes d'éblouissement et de rémanence au niveau du détecteur. Il est donc souhaitable de minimiser le nombre d'images réalisées en mode visible par la gamma caméra.

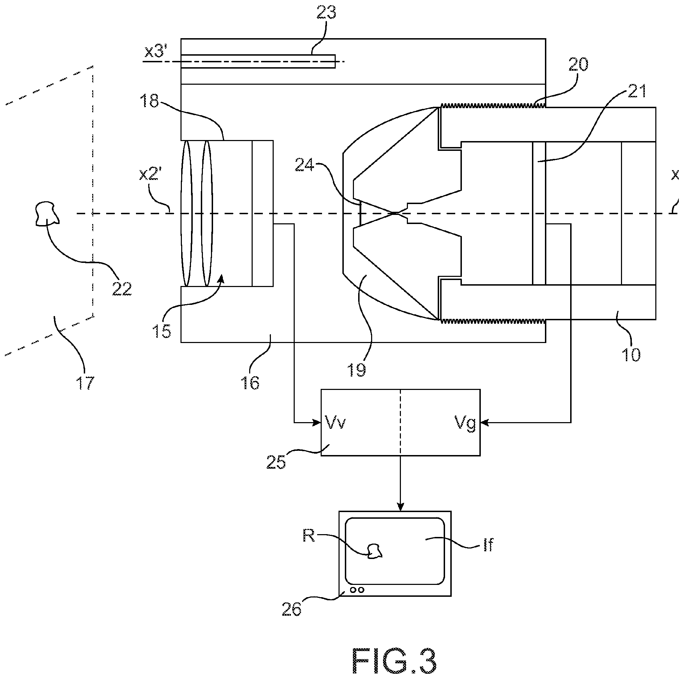

La caméra auxiliaire 15 est solidaire de la gamma caméra 10 par l'intermédiaire d'un support 16 fixé à la gamma caméra 10 du côté de sa face avant 11. La caméra auxiliaire 15 est logée dans le support 16. La caméra auxiliaire 15 est choisie compacte. La gamma caméra 10 s'emboîte dans le support 16 ou se visse au support 16. Le support 16 est réalisé dans un matériau ayant une densité aussi faible que possible de manière à atténuer au minimum le rayonnement gamma Rγ qui provient d'une ou plusieurs sources irradiantes 22 présentes dans la scène observée 17 et est dirigé vers la gamma caméra 10. Des matériaux convenant sont par exemple l'aluminium ou une matière plastique. Un même support 16 peut être utilisé quel que soit le type de la gamma caméra 10. En autres termes, le support 16 est compatible avec plusieurs modèles de gamma caméras 10. La gamma caméra 10 à sténopé comporte en face avant un collimateur sensiblement conique tandis que la face avant d'une gamma caméra 10 à masque codé est sensiblement plane. Le support 16 prend la forme par exemple d'un cylindre de révolution comportant à une extrémité un logement 18 pour la caméra auxiliaire 15 et à l'autre extrémité un compartiment 19 dans lequel vient s'emboîter la face avant 11 de la gamma caméra 10. On se réfère également à la figure 3. Un pas de vis 20 peut être prévu pour un vissage sur la gamma caméra 10 comme illustré sur la figure 3. L'objectif de la caméra auxiliaire 15 peut affleurer le support 16. Le support 16 a un diamètre extérieur qui est supérieur à celui de la gamma caméra 10 pour permettre l'emboîtement. Le but est de ne pas trop augmenter le diamètre du dispositif d'imagerie gamma par rapport à celui de la gamma caméra seule. Par contre une fois que le support 16 est fixé à la gamma caméra 10, le dispositif d'imagerie gamma a une longueur augmentée par rapport à celle de la gamma caméra seule.

Le support 16 est opaque à la lumière visible ou proche du visible qui atteint la caméra auxiliaire 15 et est fixé de manière suffisamment étanche à la gamma caméra 10 à empêcher que ladite lumière ne pénètre dans la gamma caméra 10. Cela protège le scintillateur et le tube intensificateur d'image de la gamma caméra et augmente sa durée de vie.

Le détecteur 21 de la gamma caméra 10, que ce soit un dispositif à couplage de charges ou un détecteur solide à semi-conducteurs comporte une pluralité d'éléments sensibles ou pixels qui délivrent chacun un signal électrique fonction d'une distribution de rayonnement gamma Rγ émis par une ou plusieurs sources irradiantes 22 présentes dans la scène observée 17. Les signaux issus du détecteur 21 sont à la fois fonction de la position qu'ils ont à la surface du détecteur 21 et fonction de l'énergie gamma à l'origine des interactions dans le scintillateur s'il est présent ou dans le détecteur lui-même lorsqu'il est solide à semi-conducteurs.

Le dispositif d'imagerie gamma selon l'invention peut en outre comporter une sonde 23 de spectrométrie gamma collimatée solidaire du support 16 et/ou de la gamma caméra 10. La sonde de spectrométrie gamma 17 est orientée selon un axe x3' qui est sensiblement parallèle à l'axe commun x1', x2' de la gamma caméra 10 et de la caméra visible 15 mais il en est décalé.

Il est possible de prévoir en outre un obturateur 24 en face avant de la gamma caméra 10 qui peut être amovible ou non. Cet obturateur permet de réaliser des images gamma lorsqu'il est fermé ou des images visibles lorsqu'il est ouvert. L'utilisation de l'obturateur 24 permet l'étalonnage préliminaire des champs de vision de la caméra en mode gamma et en mode visible.

Il existe également des gamma caméras à collimateur à faisceau parallèle.

Les gamma caméras utilisant un collimateur à faisceau parallèle ne sont pas adaptées à la localisation de sources irradiantes situées à des distances importantes, par exemple supérieures à 1 m du collimateur. On utilise préférentiellement ce type de caméra au contact ou pseudo-contact, la distance entre le collimateur et la source étant généralement comprise entre quelques centimètres et quelques dizaines de centimètres.

Les gamma caméras utilisant un collimateur à masque codé peuvent convenir à l'observation de sources irradiantes situées à des distances plus importantes, mais elles posent le problème d'une création d'artéfacts lorsque les sources sont situées à proximité du champ observé. Les inventeurs ont donc constaté que lorsque les sources irradiantes sont situées à des distances variables par rapport à la gamma caméra, distances pouvant varier de quelques dizaines de centimètres à quelques dizaines de mètres, et en tout point du champ observé, y compris au voisinage des limites du champ, voire hors du champ, la configuration à sténopé était préférable par rapport à une configuration de type masque codé ou collimateur à faisceaux parallèles. Une configuration à sténopé permet d'obtenir un système optique ayant une profondeur de champ infini, c'est-à-dire que les sources irradiantes apparaîtront nettement, quelle que soit leur distance par rapport au dispositif d'imagerie gamma, sans qu'une mise au point particulière ne soit nécessaire. Une telle configuration est donc très intéressante.

De plus, l'utilisation d'une gamma caméra de type sténopé n'impose pas l'utilisation d'algorithme de décodage complexe.

Le dispositif d'imagerie gamma selon l'invention comporte de plus un dispositif d'affichage 26 et des moyens d'acquisition et de traitement 25 de signaux électriques délivrés par la caméra auxiliaire 15 et par la gamma caméra 10. Ces moyens d'acquisition et de traitement 25 comportent deux voies d'acquisition et de traitement, l'une dénommée voie gamma Vg et l'autre dénommée voie visible Vv qui coopèrent pour délivrer sur le dispositif d'affichage 26 une image finale If qui est une image en lumière visible d'une scène capturée par la caméra visible 15 à un instant donné selon une direction de visée. Sur l'image finale If apparaît en superposition une représentation R d'une ou plusieurs sources irradiantes 22 capturées par la gamma caméra 10 sensiblement à l'instant donné et avec sensiblement la même direction de visée. Les directions de visée correspondent aux axes x1', x2'. Les axes optiques x1', x2' des deux caméras sont confondus sur les figures. Les champs de vision des caméras peuvent être différents, il est toutefois préférable que le champ de vision de la caméra visible soit plus important.

Les moyens d'acquisition et de traitement 25 incluent un système informatique de traitement d'images qui peut être conventionnel.

Au moins deux modes de traitement peuvent être employés, le premier étant appelé mode superposition et le second mode guide, un troisième mode appelé mixte peut combiner en partie les deux modes. Dans les modes de traitement, l'image de lumière visible Iv et le rayonnement gamma à la base de l'image gamma Ig sont capturés sensiblement au même instant, et ils correspondent à une même scène observée. Ces images transitent chacune par une voie Vv, Vg respectivement.

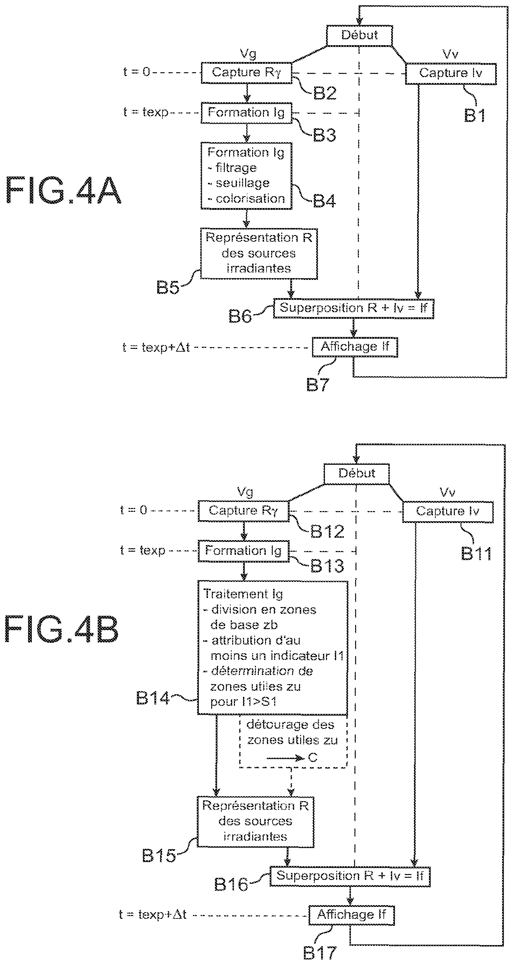

On va décrire en premier le mode superposition en se référant à la figure 4A.

A l'instant de début (t=0) la caméra auxiliaire capture une image de lumière visible Iv (bloc B1) de la scène observée et sensiblement simultanément la gamma caméra capture un rayonnement gamma Rγ (bloc B2) en provenance d'une ou plusieurs sources irradiantes se trouvant dans la même scène observée.

Ce rayonnement gamma Rγ va servir à former une image gamma Ig (bloc B3), mais cette image gamma Ig n'est formée qu'au bout d'un temps texp qui correspond au temps d'exposition du détecteur. Ce temps d'exposition texp varie, par exemple, entre 0,04 seconde et 5 secondes, préférentiellement entre 0,8 seconde et un peu plus de 2 secondes.

Dès que l'image gamma Ig est formée au niveau du détecteur, elle est traitée (bloc B4), le traitement peut comporter au moins un filtrage passe-bas pour éliminer le bruit. Il comporte aussi un seuillage en utilisant un ou plusieurs seuils, une colorisation pour attribuer une couleur différente aux pixels de l'image gamma Ig selon leur niveau après le seuillage, la colorisation est fonction des seuils. D'autres traitements, actuellement connus de l'homme du métier, peuvent être envisagés. Le traitement conduit à une représentation R des sources irradiantes (bloc B5). Les sources irradiantes correspondent sur la représentation R à des tâches colorisées.

La représentation R est superposée à l'image de lumière visible Iv (bloc B6), cela donne l'image finale If. Les taches colorisées se détachent sur le fond de l'image visible. L'image finale If est affichée sur les moyens d'affichage 26 à l'instant t=texp+Δt (bloc B7). Le temps Δt s'écoulant la formation de l'image gamma Ig et l'affichage de l'image finale If est très faible, il dépend des performances des moyens de traitement utilisés ainsi que du temps d'exposition de la caméra : il est typiquement compris entre quelques millisecondes et quelques secondes.

Le dispositif d'imagerie gamma selon l'invention peut alors capturer un nouveau rayonnement gamma Rγ et sensiblement simultanément une nouvelle image de lumière visible Iv de la même scène observée. Le temps de rafraîchissement entre la formation de deux images gamma successives est compris entre environ 0,04 seconde et 5 secondes.

Le mode guide va être décrit maintenant en se référant à la figure 4B.

A l'instant de début (t=0) la caméra auxiliaire capture une image de lumière visible Iv (bloc B11) de la scène observée et sensiblement simultanément la gamma caméra capture un rayonnement gamma Rγ (bloc B12) en provenance d'une ou plusieurs sources irradiantes se trouvant dans la même scène observée.

Ce rayonnement gamma Rγ va servir à former une image gamma Ig (bloc B13), mais cette image gamma Ig n'est formée au niveau du détecteur qu'au bout d'un temps texp qui correspond au temps d'exposition du détecteur. Ce temps d'exposition texp varie, par exemple, entre 0,04 seconde et 5 secondes, préférentiellement entre 0,8 seconde et un peu plus de 2 secondes.

L'image gamma Ig formée va être traitée (bloc B14). Elle est divisée en une ou plusieurs zones de base zb pourvues de pixels. On attribue à chacune des zones de base zb au moins un indicateur I1 traduisant la quantité de signal présente dans chacun des pixels de la zone de base zb. Pour cela on peut faire une analyse arithmétique et l'indicateur I1 peut être la moyenne arithmétique du niveau de chacun des pixels de la zone de base zb. D'autres indicateurs pourraient être utilisés comme la variation de la moyenne arithmétique ou d'autres indicateurs statistiques comme la moyenne ou autre fractile, l'écart type, etc....

On détermine ensuite parmi les zones de base zb, une ou plusieurs zones utiles zu pour lesquelles l'indicateur I1 est supérieur à un seuil S1. Les zones utiles zu donnent une représentation R des sources irradiantes. On peut ensuite superposer sur l'image de lumière visible Iv, la représentation R.

En variante, on peut détourer chaque zone utile zu pour faire apparaître le contour C de chaque zone utile zu de l'image gamma Ig. Le contour des zones utiles zu donne la représentation des sources irradiantes. On ne superpose alors sur l'image de lumière visible Iv que le contour C des zones utiles zu de l'image gamma Ig. Dans les deux cas, les zones utiles zu ou le contour des zones utiles donnent une représentation R des sources irradiantes observées.

La représentation R est superposée à l'image de lumière visible Iv (bloc B6), cela donne l'image finale If.

L'image finale If est affichée sur les moyens d'affichage 26 à l'instant t= texp+Δt (bloc B7). Le temps Δt s'écoulant entre la formation de l'image gamma Ig et l'affichage de l'image finale If est très faible. Il dépend des performances des moyens de traitement utilisés ainsi que du temps d'exposition de la caméra, il est typiquement compris entre quelques millisecondes et quelques secondes.

Le nombre de zones de base zb, leur forme géométrique et le seuil S1 sont ajustables et choisis par un opérateur faisant fonctionner le dispositif d'imagerie de l'invention. La forme géométrique est de préférence polygonale. Les zones utiles zu sont celles qui génèrent l'irradiation la plus intense.

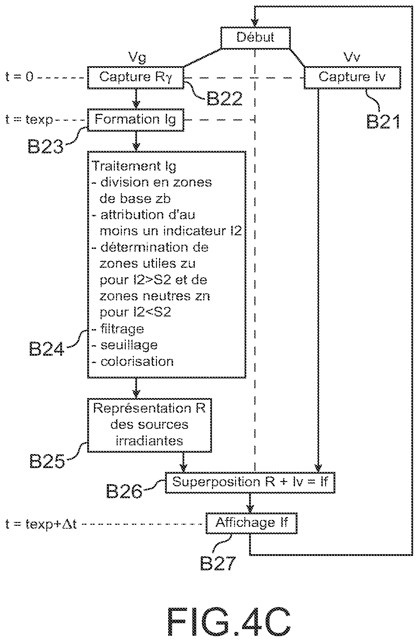

En se référant à la figure 4C, on va maintenant décrire le mode mixte. A l'instant de début (t=0), la caméra auxiliaire acquiert une image de lumière visible Iv (bloc B21) de la scène observée et sensiblement simultanément la gamma caméra capture un rayonnement gamma Rγ (bloc B22) en provenance d'une ou plusieurs sources irradiantes se trouvant dans la même scène observée. Ce rayonnement gamma Rγ va servir à former une image gamma Ig (bloc B23), mais cette image gamma Ig n'est reçue par le détecteur qu'au bout d'un temps texp qui correspond au temps d'exposition du détecteur.

Ce temps d'exposition texp varie, par exemple, entre 0,04 seconde et 5 secondes, préférentiellement entre 0,8 seconde et un peu plus de 2 secondes.

L'image gamma Ig formée va être traitée (bloc B24). Elle est divisée en une ou plusieurs zones de base zb pourvues de pixels. On attribue à chacune des zones de base zb au moins un indicateur I2 traduisant la quantité de signal présente dans chacun des pixels de la zone de base zb. Pour cela on peut faire une analyse arithmétique et l'indicateur I2 peut être la moyenne arithmétique du niveau de chacun des pixels de la zone de base zb. D'autres indicateurs pourraient être utilisés comme la médiane ou autres fractiles, la variance, ou l'évolution de ces indicateurs en fonction du temps. On détermine ensuite parmi les zones de base zb de l'image gamma Ig formée une ou plusieurs zones neutres zn pour lesquelles l'indicateur I2 est inférieur à un seuil S2 et une ou plusieurs zones utiles zu pour lesquelles l'indicateur est supérieur ou égal au seuil S2. On affecte les pixels des zones neutres zn d'un niveau zéro. On effectue un seuillage à un ou plusieurs seuils des zones neutres zn et utiles zu puis une colorisation en fonction des seuils. Un filtrage peut être prévu avant le seuillage. Les zones utiles zu et les zones neutres zn donnent après seuillage et colorisation la représentation R des sources irradiantes (bloc B25).

La représentation R est superposée à l'image de lumière visible Iv (bloc B26), cela donne l'image finale If.

L'image finale If est affichée sur les moyens d'affichage 21 à l'instant t=texp+Δt (bloc B27). Les sources irradiantes apparaissent comme des taches colorisées sur l'image visible. Le temps Δt s'écoulant la formation de l'image gamma Ig et l'affichage de l'image finale If est très faible. Il dépend des performances des moyens de traitement utilisés ainsi que du temps d'exposition de la caméra, il est typiquement compris entre quelques millisecondes et quelques secondes.

Le dispositif d'imagerie gamma selon l'invention peut alors capturer un nouveau rayonnement gamma et sensiblement simultanément une nouvelle image de lumière visible Iv de la même scène observée. Le temps de rafraîchissement entre la capture de deux images gamma successives est compris entre environ 0,04 seconde et 5 secondes.

Le nombre de zones de base zb, leur forme géométrique et le seuil S1 sont ajustables et choisis par un opérateur faisant fonctionner le dispositif d'imagerie de l'invention. La forme géométrique est de préférence polygonale. Les zones utiles zu sont celles qui génèrent l'irradiation la plus intense.

Dans l'invention, le dispositif d'imagerie permet de capturer au même instant un rayonnement gamma conduisant à une image gamma et une image de lumière visible dans même scène observée.

Dans l'art antérieur, on ne pouvait pas observer la scène avec une même direction de visée dans la mesure où la gamma caméra et la caméra auxiliaire étaient décalées axialement l'une par rapport à l'autre ou qu'il y avait un miroir de renvoi. Lorsque la gamma caméra fonctionnait en mode visible et en mode gamma, l'image visible et le rayonnement gamma conduisant à l'image gamma n'étaient pas capturées simultanément.

Le dispositif d'imagerie gamma selon l'invention permet donc de localiser des sources irradiantes en temps réel tout en déplaçant l'ensemble gamma caméra et caméra auxiliaire. On peut obtenir une image de lumière visible de la scène observée sur laquelle la source irradiante détectée est encadrée. En variante, on peut obtenir une image de lumière visible de la scène observée sur laquelle, on superpose une représentation des sources irradiantes détectées. Un autre mode de fonctionnement est de viser un point précis de la scène observée et d'effectuer une mesure plus longue.

L'intérêt de cette mesure plus longue est l'accumulation d'images entraînant une meilleure statistique de mesure. Ce mode implique un rafraîchissement plus lent de l'image finale puisqu'il est lié au nombre d'images accumulées. Le nombre d'images accumulées peut être prédéterminé ou non.

Si une sonde de spectrométrie collimatée est prévue dans le dispositif d'imagerie gamma selon l'invention, on peut obtenir une quantification des sources irradiantes détectées. Cette quantification est toutefois obtenue en différé.

Bien que plusieurs modes de réalisation de la présente invention aient été représentés et décrits de façon détaillée, on comprendra que différents changements et modifications puissent être apportés sans sortir du cadre de l'invention.

### DOCUMENTS CITES

[1] FR-A- 2 734 372
[2] "The development and improvement of the Aladin gamma camera to localize gamma activity in nuclear activities", C. Le Goaller et al., European commission, Nuclear science and technology, EUR 18230, 1998.
[3] « On site nuclear video imaging », C. Le Goaller et al., Waste Management 1998, Tucson, USA, février 1998.
[4] « Imaging systems : new techniques for decommissioning », C. Mahé et al., ANS 2005, Denver, USA, Août 2005.
[5] « Recent progress in low-level gamma imaging », C. Mahé et al., ICEM 2007, Bruges, Belgique, Septembre 2007.
[6] WO 2006/090035
[7] « Gamma imaging : recent achievements and on-going developments », Le Goaller et al., European Nuclear Conférence 2005, Versailles, France, Décembre 2005.
[8] « First experimental tests with a CdTe photon counting pixel detector hybridized with a Medipix2 readout chip », O. Gal et al., IEEE 2003, Nuclear Science Symposium Conference Record, Septembre 2007.
[9] WO2006/123119 A1.

## Revendications

1. Dispositif d'imagerie gamma comportant une gamma caméra (10) destinée à capturer une image de rayonnement gamma, dite image gamma, d'une scène observée (17), pourvue d'une face avant (11) et possédant un axe de visée (x1') ainsi qu'une caméra auxiliaire (15) destinée à capturer une image de lumière visible de la scène observée (17), la caméra auxiliaire (15) se trouvant en amont de la face avant (11) de la gamma caméra (10) qui est une gamma caméra à collimateur de type sténopé, la caméra auxiliaire (15) possédant un axe optique (x2') qui est sensiblement confondu avec l'axe de visée (x1') de la gamma caméra (10) de sorte que l'image de lumière visible et l'image gamma soient capturées sensiblement simultanément avec une même direction de visée et que des sources irradiantes distantes de quelques dizaines de centimètres à quelques dizaines de mètres de la gamma caméra puissent être localisées, le dispositif d'imagerie gamma étant **caractérisé en ce que** la caméra auxiliaire (15) comporte un objectif, la caméra auxiliaire (15) étant agencée de sorte que l'axe de visée (x1') de la gamma caméra (10) traverse l'objectif de la caméra auxiliaire (15).

2. Dispositif d'imagerie gamma selon la revendication 1, comportant en outre des moyens d'acquisition et de traitement (25) de signaux délivrés par la caméra auxiliaire (15) et par la gamma caméra (10) destinés à fournir, sensiblement en temps réel par rapport à la capture, à des moyens d'affichage (26), une image finale (If) de la scène observée (17) qui est une superposition de l'image de lumière visible (Iv) et d'une représentation d'une ou plusieurs sources irradiantes (22) se trouvant dans la scène observée (17) et ayant été détectées sur l'image gamma capturée.

3. Dispositif d'imagerie gamma selon la revendication 2, dans lequel la représentation (R) est une tache colorisée ou un contour.

4. Dispositif d'imagerie gamma selon l'une des revendications 1 à 3, dans lequel la caméra auxiliaire (15) est montée sur un support (16) qui est fixé à l'avant de la gamma caméra (10), notamment par vissage ou par emboîtement.

5. Dispositif d'imagerie gamma selon la revendication 4, dans lequel le support (16) est sensiblement un cylindre de révolution et possède un diamètre extérieur supérieur au diamètre extérieur de la gamma caméra (10) pour permettre le vissage ou l'emboîtement.

6. Dispositif d'imagerie gamma selon la revendication 4 ou la revendications 5, dans lequel le support (16) est réalisé dans un matériau opaque vis-à-vis de la lumière visible de manière à empêcher qu'elle pénètre à l'intérieur de la gamma caméra (10).

7. Dispositif d'imagerie gamma selon l'une des revendications 4 à 6, dans lequel le support (16) est réalisé dans un matériau à densité suffisamment faible tel que l'aluminium ou une matière plastique de manière à atténuer le moins possible le rayonnement gamma en provenance de la scène observée (17).

8. Dispositif d'imagerie gamma selon l'une des revendications 1 à 7, comportant en outre une sonde (23) de spectrométrie collimatée solidaire du support (16) et/ou de la gamma caméra (10).

9. Dispositif d'imagerie gamma selon l'une des revendications 1 à 8, comportant en outre un obturateur (24) amovible ou inamovible en face avant (11) de la gamma caméra (10).

10. Dispositif d'imagerie gamma selon l'une des revendications précédentes, dans lequel la gamma caméra (10) est apte à fournir une image de lumière visible de la scène observée, les images de lumière visible provenant de la gamma caméra (10) et de la caméra auxiliaire (15) sont recalées l'une par rapport à l'autre.

11. Procédé de localisation d'une ou plusieurs sources irradiantes présentes dans une scène observée par un dispositif d'imagerie gamma selon l'une des revendications 2 à 10, **caractérisé en ce qu'**il comporte les étapes de :
- capture sensiblement simultanée, avec la même direction de visée, d'un rayonnement gamma (Rγ) provenant des sources irradiantes (22) par la caméra gamma et d'une image de lumière visible (Iv) de la scène observée par la caméra auxiliaire, la caméra auxiliaire se trouvant en amont de la gamma caméra, son axe optique étant sensiblement confondu avec l'axe de visée de la gamma caméra ;
- formation d'une image gamma (Ig) de la scène observée à partir du rayonnement gamma capturé ;
- traitement de l'image gamma (Ig) conduisant à une représentation (R) des sources irradiantes (22) avec :
• une division de l'image gamma (Ig) en une ou plusieurs zones de base (zb) formées de pixels,
• une attribution d'au moins un indicateur (I1) à chaque zone de base (zb), cet indicateur (I1) traduisant une quantité de signal des pixels de la zone de base (zb);
• une détermination parmi les zones de base (zb) d'une ou plusieurs zones utiles (zu) pour lesquelles l'indicateur (I1) est supérieur à un seuil (S1);
• éventuellement un détourage des zones utiles (zu) pour faire apparaître un contour (C) des zones utiles, les zones utiles ou le contour des zones utiles donnant la représentation (R).
- superposition de l'image de lumière visible (Iv) et de la représentation (R) pour obtenir une image finale (If) de la scène observée (17);
- affichage de l'image finale (If).

12. Procédé de localisation d'au moins une source irradiante selon la revendication 11, dans lequel le traitement comprend en outre :
- une détermination parmi les zones de base (zb) d'une ou plusieurs zones neutres (zn) pour lesquelles l'indicateur (I2) est inférieur au seuil (S2) ;
- une affectation d'un niveau zéro aux pixels des zones neutres (zn) ;
- un seuillage à un ou plusieurs seuils et une colorisation en fonction des seuils des zones neutres et utiles, les zones neutres et utiles après le seuillage et la colorisation donnant la représentation (R).

13. Procédé de localisation selon l'une quelconque des revendications 11 ou 12, dans lequel le seuillage est précédé d'un filtrage.

14. Procédé de localisation selon l'une des revendications 11 ou 12, dans lequel l'indicateur (I1, I2) est une moyenne de niveau des pixels de la zone de base (zb).

## Patentansprüche

1. Gammabildgebungseinrichtung, enthaltend eine Gammakamera (10), die dazu bestimmt ist, ein Gammastrahlenbild, Gammabild genannt, einer beobachteten Szene (17) aufzunehmen, und die mit einer Vorderseite (11) versehen ist und eine Sichtachse (x1') besitzt, sowie eine Hilfskamera (15), die dazu bestimmt ist, ein Bild sichtbaren Lichts der beobachteten Szene (17) aufzunehmen, wobei die Hilfskamera (15) der Vorderseite (11) der Gammakamera (10) vorgelagert ist, die eine Gammakamera mit Kollimator vom Typ Lochkamera ist, wobei die Hilfskamera (15) eine optische Achse (x2') besitzt, die im Wesentlichen mit der Sichtachse (x1') der Gammakamera (10) zusammenfällt, so dass das Bild sichtbaren Lichts und das Gammabild im Wesentlichen gleichzeitig mit der gleichen Blickrichtung aufgenommen werden und dass Strahlungsquellen im Abstand von einigen zehn Zentimetern bis zu einigen zehn Metern von der Gammakamera lokalisiert werden können, wobei die Gammabildgebungseinrichtung **dadurch gekennzeichnet ist, dass** die Hilfskamera (15) ein Objektiv enthält, wobei die Hilfskamera (15) so angeordnet ist, dass die Sichtachse (x1') der Gammakamera (10) durch das Objektiv der Hilfskamera (15) verläuft.

2. Gammabbildungseinrichtung nach Anspruch 1, ferner enthaltend Mittel zum Erfassen und Verarbeiten (25) von Signalen, die von der Hilfskamera (15) und von der Gammakamera (10) ausgegeben werden und dazu bestimmt sind, Anzeigemitteln (26) im Wesentlichen in Echtzeit bezüglich des Aufnehmens ein Endbild (If) der beobachteten Szene (17) zuzuführen, das eine Überlagerung des Bildes sichtbaren Lichts (Iv) und einer Abbildung einer bzw. mehrerer Strahlungsquellen (22) ist, die sich in der beobachteten Szene (17) befinden und an dem aufgenommenen Gammabild erfasst wurden.

3. Gammaabbildungseinrichtung nach Anspruch 2, wobei die Abbildung (R) ein Farbfleck oder eine Kontur ist.

4. Gammaabbildungseinrichtung nach einem der Ansprüche 1 bis 3, wobei die Hilfskamera (15) an einen Träger (16) angebracht ist, der an die Vorderseite der Gammakamera (10) insbesondere durch Anschrauben oder Anstecken befestigt ist.

5. Gammaabbildungseinrichtung nach Anspruch 4, wobei der Träger (16) im Wesentlichen ein Rotationszylinder ist und einen Außendurchmesser besitzt, der größer als der Außendurchmesser der Gammakamera (10) ist, um das Anschrauben bzw. Anstecken zu gestatten.

6. Gammaabbildungseinrichtung nach Anspruch 4 oder Anspruch 5, wobei der Träger (16) aus einem Material hergestellt ist, das gegenüber sichtbarem Licht undurchlässig ausgebildet ist, so dass verhindert wird, dass es in die Gammakamera (10) eindringt.

7. Gammaabbildungseinrichtung nach einem der Ansprüche 4 bis 6, wobei der Träger (16) aus einem Material mit einer ausreichend geringer Dichte hergestellt ist, wie etwa Aluminium oder Kunststoff, so dass die von der beobachteten Szene (17) stammenden Gammastrahlen möglichst wenig gedämpft werden.

8. Gammaabbildungseinrichtung nach einem der Ansprüche 1 bis 7, ferner enthaltend eine kollimierte Spektrometersonde (23), die fest mit dem Träger (16) und/oder der Gammakamera (10) verbunden ist.

9. Gammaabbildungseinrichtung nach einem der Ansprüche 1 bis 8, ferner enthaltend einen abnehmbaren oder nicht abnehmbaren Verschluss (24) an der Vorderseite (11) der Gammakamera (10).

10. Gammaabbildungseinrichtung nach einem der vorangehenden Ansprüche, wobei die Gammakamera (10) dazu geeignet ist, ein Bild sichtbaren Lichts der beobachteten Szene bereitzustellen, wobei die von der Gammakamera (10) und von der Hilfskamera (15) stammenden Bilder sichtbaren Lichts zueinander kalibriert werden.

11. Verfahren zum Lokalisieren einer bzw. mehrerer Strahlungsquellen, die in einer beobachteten Szene vorhanden sind, mit einer Gammaabbildungseinrichtung nach einem der Ansprüche 2 bis 10, **dadurch gekennzeichnet, dass** es die Schritte umfasst:
- im Wesentlichen gleichzeitiges Aufnehmen einer von Strahlungsquellen (22) stammenden Gammastrahlung (Ry) über die Gammakamera und eines Bildes sichtbaren Lichts (Iv) der beobachteten Szene über die Hilfskama, mit der gleichen Blickrichtung, wobei die Hilfskamera der Gammakamera vorgelagert ist, wobei ihre optische Achse im Wesentlichen mit der Sichtachse der Gammakamera zusammenfällt;
- Erstellen eines Gammabildes (Ig) der beobachteten Szene ausgehend von der aufgenommenen Gammastrahlung;
- Bearbeiten des Gammabildes (Ig), das zu einer Abbildung (R) der Strahlungsquellen (22) führt, mit:
• Unterteilen des Gammabildes (Ig) in einen bzw. mehrere Basisbereiche (zb), die aus Pixeln gebildet sind,
• Zuordnen zumindest eines Indikators (I1) zu jedem Basisbereich (zb), wobei dieser Indikator (11) eine Signalgröße der Pixel des Basisbereichs (zb) widergibt;
• Bestimmen von einem bzw. mehreren Nutzbereichen (zu) aus den Basisbereichen (zb), bei denen der Indikator (I1) größer als ein Schwellenwert (S1) ist;
• gegebenenfalls Zuschneiden der Nutzbereiche (zu), um eine Kontur (C) der Nutzbereiche erscheinen zu lassen, wobei die Nutzbereiche bzw. die Kontur der Nutzbereiche die Abbildung (R) ergeben;
- Überlagern des Bildes sichtbaren Lichts (Iv) und der Abbildung (R), um ein Endbild (If) der beobachteten Szene (17) zu erhalten;
- Anzeigen des Endbildes (If).

12. Verfahren zum Lokalisieren zumindest einer Strahlungsquelle nach Anspruch 11, wobei das Bearbeiten ferner umfasst:
- Bestimmen von einem bzw. mehreren neutralen Bereichen (zn) aus den Basisbereichen (zb), bei denen der Indikator (I2) geringer als der Schwellenwert (S2) ist;
- Zuweisen eines Nullniveaus zu den Pixeln der neutralen Bereiche (zn);
- Bestimmen eines bzw. mehrerer Schwellenwerte und Farbgebung in Abhängigkeit von den Schwellenwerten der neutralen Bereiche und der Nutzbereiche, wobei die neutralen Bereiche und die Nutzbereiche nach der Schwellenwertbestimmung und Farbgebung die Abbildung (R) ergeben.

13. Verfahren zum Lokalisieren nach einem der Ansprüche 11 oder 12, wobei der Schwellenwertbestimmung eine Filterung vorausgeht.

14. Verfahren zum Lokalisieren nach einem der Ansprüche 11 oder 12, wobei der Indikator (I1, I2) ein Durchschnittswert des Pegels der Pixel von dem Basisbereich (zb) ist.

## Claims

1. Gamma imaging device comprising a gamma camera (10) for capturing a gamma radiation image, referred to as a gamma image, of an observed scene (17), provided with a front face (11) and having an axis of sight (x1') and an auxiliary camera (15) for capturing a visible light image of the observed scene (17), the auxiliary camera (15) being situated upstream from the front face (11) of the gamma camera (10) which is a pinhole-type-collimator gamma camera, the auxiliary camera (15) having an optical axis (x2') substantially merged with the axis of sight (x1') of the gamma camera (10) such that the visible light image and the gamma image are captured substantially simultaneously with the same direction of sight and that irradiant sources at a distance of tens of centimetres to tens of metres from the gamma camera can be localised,
the gamma imaging device being **characterized in that** the auxiliary camera (15) comprises a lens, the auxiliary camera (15) being arranged so that the axis of sight (x1') of the gamma camera (10) crosses the lens of the auxiliary camera (15).

2. Gamma imaging device according to claim 1, further comprising acquisition and processing means (25) of signals output by the auxiliary camera (15) and by the gamma camera (10) for supplying, substantially in real time in relation to the capture, to display means (26), a final image (If) of the observed scene (17) which is an overlay of the visible light image (Iv) and a representation of one or a plurality of irradiant sources (22) situated in the observed scene (17) and detected on the captured gamma image.

3. Gamma imaging device according to claim 2, wherein the representation (R) is a coloured spot or an outline.

4. Gamma imaging device according to any of claims 1 to 3, wherein the auxiliary camera (15) is mounted on a supporting member (16) which is attached to the front of the gamma camera (10), particularly by screwing or by fitting.

5. Gamma imaging device according to claim 4, wherein the supporting member (16) is substantially a revolving cylinder and has an outer diameter greater than the outer diameter of the gamma camera (10) to enable screwing or fitting.

6. Gamma imaging device according to claim 4 or claim 5, wherein the supporting member (16) is made of a material opaque to visible light, to prevent said light from entering inside the gamma camera (10).

7. Gamma imaging device according to any of claims 4 to 6, wherein the supporting member (16) is made of a material having a sufficiently low density, such as aluminium or a plastic, to attenuate the gamma radiation from the observed scene (17) as little as possible.

8. Gamma imaging device according to any of claims 1 to 7, further comprising a collimated spectrometry probe (23) rigidly connected to the supporting member (16) and/or the gamma camera (10).

9. Gamma imaging device according to any of claims 1 to 8, further comprising an optionally removable shutter (24) at the front face (11) of the gamma camera (10).

10. Gamma imaging device according to any of the above claims, wherein the gamma camera (10) is suitable for providing a visible light image of the observed scene, the visible light images from the gamma camera (10) and the auxiliary camera (15) are realigned with respect to each other.

11. Method for localising one or a plurality of irradiant sources present in a scene observed by a gamma imaging device according to any of claims 2 to 10, **characterised in that** it comprises steps for:
- substantially simultaneous capture, with the same direction of sight, of gamma irradiation (Rγ) from the irradiant sources (22) by the gamma camera and a visible light image (Iv) of the scene observed by the auxiliary camera, the auxiliary camera being situated upstream from the gamma camera, the optical axis thereof merging substantially with the axis of sight of the gamma camera;
- formation of a gamma image (Ig) of the observed scene using the gamma radiation captured;
- processing of the gamma image (Ig) giving rise to a representation (R) of the irradiant sources (22) with:
-- division of the gamma image (Ig) into one or a plurality of basic zones (zb) consisting of pixels,
-- allocation of at least one indicator (I1) to each basic zone (zb), this indicator (I1) conveying a basic zone (zb) signal quantity;
-- determination among the basic zones (zb) of one or a plurality of effective zones (zu) for which the indicator (I1) is greater than a threshold (S1);
-- optionally, cropping of the effective zones (zu) to show an outline (C) of the effective zones, the effective zones or the outline of the effective zones giving the representation (R).
- overlay of the visible light image (Iv) and the representation (R) to obtain a final image (If) of the observed scene (17);
- display of the final image (If).

12. Method for localising at least one irradiant source according to claim 11, wherein the processing further comprising:
- determination among the basic zones (zb) of one or a plurality of neutral zones (zn) for which the indicator (I2) is less than the threshold (S2);
- allocation of a zero level to the neutral zone (zn) pixels;
- thresholding at one or a plurality of thresholds and colouring on the basis of the thresholds of the neutral and effective zones, the neutral and effective zones after thresholding and colouring giving the representation (R).

13. Method for localising according to any of claims 11 or 12, wherein the thresholding is preceded by filtering.

14. Method for localising according to any of claims 11 or 12, wherein the indicator (I1, I2) is a mean level of pixels of the basic zone (zb).
